# EUROPEAN PATENT SPECIFICATION

(11) **EP 0 490 488 B1**
(45) Date of publication and mention of the grant of the patent: **25.01.1995**
(21) Application number: 91310447.7
(22) Date of filing: 13.11.1991
(51) Int. Cl.: A47G 7/02, B65D 5/26

(54) **A carrier for projecting articles**
Tragbehälter für hervorstehende Gegenstände
Dispositif de transport pour des articles saillants

(30) Priority: 07.12.1990 GB 9026627; 07.01.1991 GB 9100263
(43) Date of publication of application: 17.06.1992
(73) Proprietor: BPB PAPER & PACKAGING LIMITED, Aberbeeg, Gwent Wales NP32 2LN (GB)
(72) Inventor: Winterborn, K., Nr Pontypool, Gwent NP4 OHU (GB)
(74) Representative: Ford, Michael Frederick

(56) References cited:
- DE-U- 8 231 691
- DE-U- 8 707 860
- FR-A- 943 534
- US-A- 4 209 945

## Description

The present invention relates to a carrier for articles which are partially inserted into the carrier and project from it, such as, for example, pot plants.

Known carriers include shallow boxes made of fibre board or other foldable sheet material. These have a top surface with an array of openings for receiving the articles to be carried. The articles are inserted through the openings to rest on a base of the box. Such a box may be referred to as a "tray" in view of its typical shallow depth.

DE-U-8231691 discloses a carrier for articles formed from cut and creased sheet material which provides a top with openings for insertion of the articles, a base, and a pair of side walls extending between the top and the base. To enhance rigidity, material which is cut out to form two of the openings in the top is left hinged to the top and made to extend downwardly to the base.

FR-A-943534 discloses a container for fresh fruit having a rectangular base and first and second pairs of side walls hinged to the base. On the outside of one of the pairs of side walls, duplicate side walls are provided by means of interlocked tabs hinged to the other pairs of side walls. Apertured panels are provided which extend across the top of the box and which terminate in tabs that can engage between the first pair of side walls and the duplicate side walls formed by the interlocked tabs. These top panels trap a transparent film between them. The two top panels can also be raised so as to incline upwardly from the side walls and meet above the centre line of the box thus giving an appearance resembling a basket.

According to a first aspect of the present invention there is provided a carrier for articles formed from a cut and creased blank of foldable sheet material comprising a top with openings for insertion of the articles, a base, a first pair of opposite side walls extending between the top and the base and additional panels transverse to the first side walls and also extending between the top and the base, characterized in that the carrier also has an internal panel extending between the top and the base intermediately between the said first side walls and spanning the full distance from the top to the base. The presence of such an internal panel enhances rigidity of the carrier. It can also enable a convenient mode of construction.

The foldable sheet material from which the carrier is made is preferably a stiff board material. Notably, this may be solid fibreboard. Further possibilities are corrugated board and other forms of board which can be handled by cutting and creasing machinery.

The top and base will usually be parallel to one another. In a preferred arrangement the first pair of side walls are each hinged to both the top and the base whereas the additional walls are engaged into place when the carrier is erected.

In one preferred arrangement the additional panels which are transverse to the first side walls form a second pair of side walls. These may be shorter in length, and then termed "end walls", but this will not necessarily be the case.

Such a second side wall is preferably provided by engagable end flaps hinged respectively to the top and to the base, so that when engaged together they form a wall extending between the top and the base panel. The engagement of two end flaps is preferably by means of a tab or tabs projecting from one end flap, fitting into a slot or slots in the other end flap.

In an alternative arrangement the additional panels transverse to the first side walls are formed by flaps cut out of the top or the base, notably at a location spaced inwardly from the edge of the top or base. These have tabs to engage the base or top when the carrier is erected. This arrangement leads to a cost-saving reduction in the amount of sheet material required.

Preferably, the internal panel is parallel to the first side walls and extends substantially the entire length of the carrier.

This invention may notably be embodied in carriers where the top is a rectangle of at least 300mm length and at least 175mm width. Certain significant embodiments have a top which is a rectangle of at least 400mm length, especially at least 500mm length, and at least 250mm width. Carriers for pot plants are customarily made with nominal length and width of 530mm by 300mm to fit onto a trolley which is in general use. The height of the carrier from the base to the top will often be not greater than 100mm, usually not greater than 80mm. The invention is of course applicable to carriers of other dimensions, also. In particular the height may be greater so that a greater portion of the plant pot fits within the carrier.

In a convenient form of construction, the top or the base is made of two panels which are secured together side by side and the internal panel is hinged to one panel of the pair. In particular the top or base, preferably the base, may be made of first and second panels, marginal portions of which overlap and are secured to one another with the second panel on the inside. Then the internal panel can be hinged to the second panel of the top or base. The internal panel may then also be hinged at its other edge to a flange which is secured to the base or the top panel.

The overlapping first and second panels may both have end flap portions hinged to them. The portions attached to the first panel can overlap the portions attached to the second panel.

In a development of this invention the top is formed by a pair of panels disposed at either side of a handle projecting upwardly from the top. This may be accomplished in various ways including forming the handle as a prolongation of the internal panel.

In the preferred arrangement the handle comprises a pair of panels hinged together and each hinged to a respective one of the panels which form the top. The internal panel can then be hinged to one of a pair of panels forming the base, and project upwardly between the two panels of the handle.

The base may comprise holes in register with, but smaller than the openings in the top, and providing a drain for articles such as pot plants.

The first or second side walls may be provided with projecting corner tabs to lie adjacent the second or first side walls and so enhance stability.

A preferred construction utilises a cut and creased blank having successions of panels hingedly connected to one pair of edges of either the base or, more preferably, the top. Each succession of panels comprises a first side wall panel adjacent and hinged to a said edge, followed by a panel of the top or the base. In one succession of panels the sequence is then continued by the internal panel, hinged to the said panel of the top or the base. This succession may then be continued by a flange hinged to the internal panel.

Preferably these successions of panels are hingedly connected to edges of the top, which includes the article receiving openings, rather than to the base. If no handle projects from the top, the top is preferably a one piece quadrilateral panel with an array of openings in it. If the carrier includes a handle projecting upwardly from the top, the top itself is preferably a succession of four hingedly connected panels. This succession is a panel to form one half of the top, a pair of panels to form the handle, and a panel to form the other half of the top. Both of the panels which form the top have openings to receive articles.

The blank may also have second wall panels, or parts thereof, hinged to the top and/or the base panels.

Such a blank is initially assembled into a sleeve, or in some cases a pair of sleeves. The empty carrier may be shipped with the sleeve(s) flattened. This invention therefore includes a flattened sleeve having a top with an array of openings therein, a base, a pair of first side walls extending between the top and base and hinged to both, an internal panel also extending between and hinged to the top and base, and additional panels, or parts of such additional panels hinged to the top or the base.

According to a second aspect of the present invention a carrier for projecting articles comprising a top with an array of openings for the insertion of articles, a base and a first pair of opposite side walls extending between the top and the base is characterised in that the openings for the insertion of articles are non-circular. This feature is useful in allowing the openings to accommodate articles, notably frusto-conical plant pots of slightly different size. Plant pots are customarily manufactured to certain nominal sizes but individual manufacturers' pots of the same nominal size differ slightly in precise diameter and in the angle of taper.

Preferably each opening is bounded, at least in part, by a plurality of arcs which define concave edges to the aperture but which do not have a common centre. One possibility might be an opening which was slightly elliptical rather than circular. A preferred possibility, however, is for each opening to be defined by at least three arcs lacking a common centre but forming a curve polygon such as a curve equilateral triangle.

According to a third aspect of the present invention a carrier for projecting articles comprising a top with an array of openings for the insertion of articles, a base and at least a first pair of opposite side walls extending between the top and the base, is characterised in that at least one pair of side walls slopes outwardly from bottom to top. This feature can be useful for increasing the number of openings which can be formed in the top without enlarging the base of the carrier to exceed boundary dimensions within which it is required to fit.

Embodiments of the invention will now be exemplified with reference to the accompanying drawings in which:-
Figure 1 is a perspective view of a first carrier embodying the present invention, shown partly cut away;
Figure 2 is an end elevation of the carrier of Figure 1 with the end flaps in an open position;
Figure 3 is a cross section taken on line III-III through the carrier of Figure 1, showing the carrier in flattened sleeve form;
Figure 4 is a blank for the carrier of Figure 1;
Figure 5 is blank for a second embodiment of carrier;
Figure 6 is a perspective top view of a third carrier embodying the invention;
Figure 7 is cross section through the carrier of Figure 6, on line VII-VII of Figure 6;
Figure 8 is a cross section on the same line, showing the carrier in flattened form;
Figure 9 is a blank for the carrier of Figure 6; and
Figure 10 shows a stage in making the carrier from the blank of Figure 9.

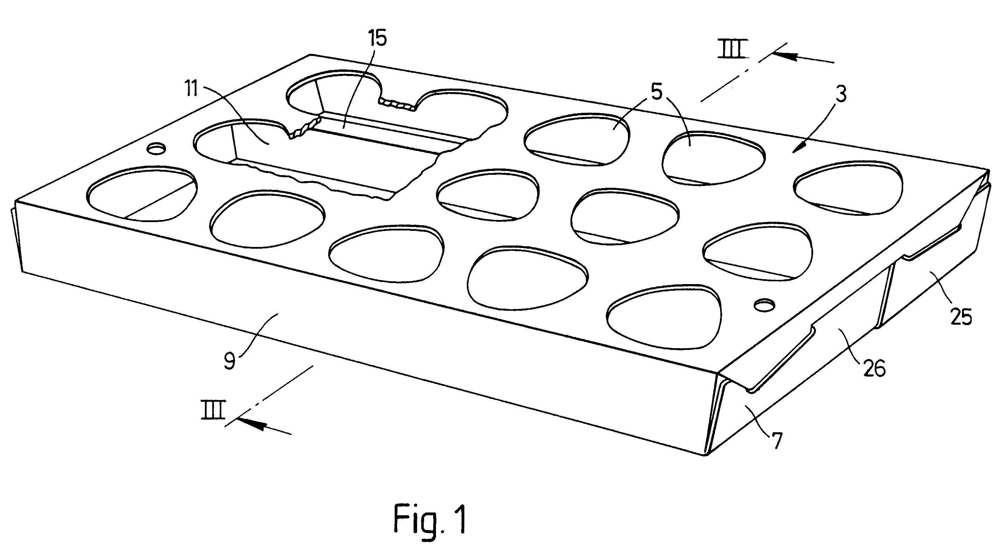

Figure 1 illustrates a carrier for pot plants which is approximately 530mm long, 300mm wide and 50mm deep. It is made of solid fibreboard. The carrier has a top panel 3 with openings 5 for receiving the pot plants. A pair of opposite first side walls 9, a pair of opposite second side walls 7 and an internal panel 11 all extend from the top panel 3 to the base 13.

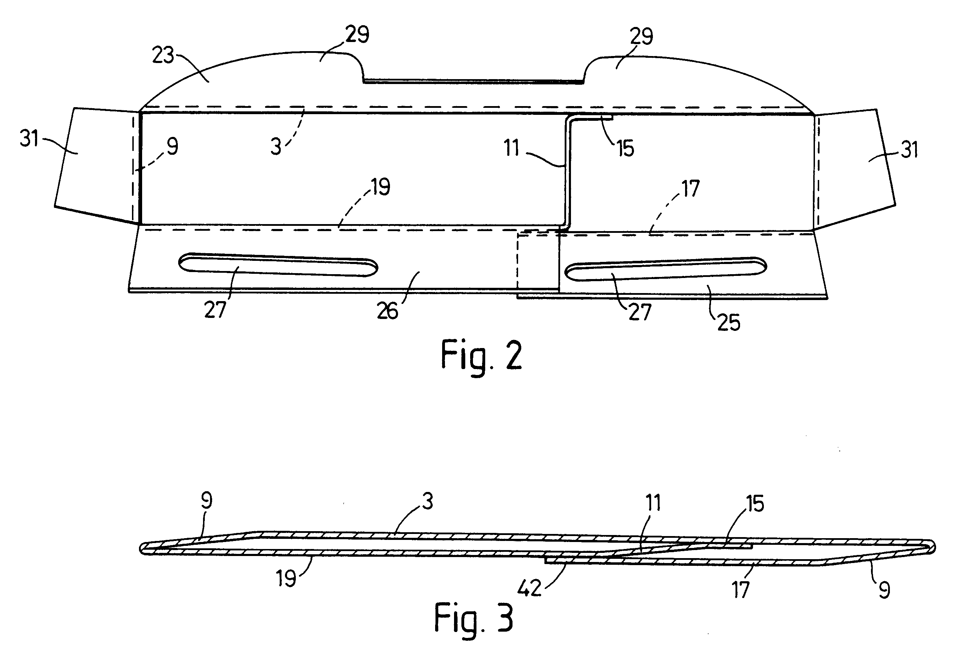

As shown in Figures 2 and 3 the internal panel 11 is hinged to a flange 15 attached to the underside of the top panel 3. The base is made of a first panel 17 and a second panel 19, the margins of which overlap one another so that the margin 42 of the first panel 17 lies outside. The second panel 19 is integral with internal panel 11 and flange 15 which are connected along fold lines 21.

The second side walls 7 are each built up from an end flap 23 which is hinged to the top panel 3, and first and second end flap portions 25,26 which are attached to the first and second base panels 17,19 respectively. The portions 25,26 overlap to form an end flap extending across the full width of carrier 1 and are each provided with a slot 27 for receiving tabs 29 projecting from the end flap 23.

As indicated in Figure 2, each side wall 9 is provided with corner tabs 31 for reinforcing the corners in the assembled carrier 1.

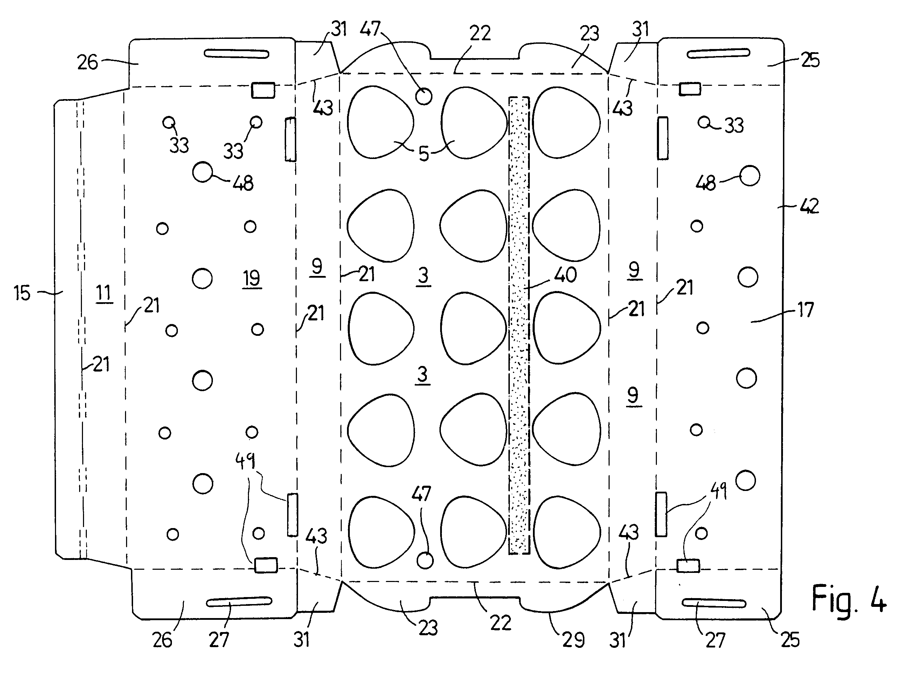

Figure 4 shows a blank for the carrier described above. It shows from right to left the first base panel 17 joined along a fold line 21 to one of the first side walls 9. This is joined along a further fold line 21 to one long edge of top panel 3. Another side wall 9 is joined along fold line 21 to the other long edge of the top panel 3 and in turn is joined along a fold line 21 to the second base panel 19. Panel 19 is joined along by a fold line 21 to internal panel 11 which is hinged to flange 15 along another fold line 21.

The various fold lines 21 are lines of weakening at which adjacent panels, integral with one another, are hingedly connected together. The fold line between panels 11 and 15 is formed by creases alternating with cuts.

The end flaps 23 are hinged to the top 3 along fold lines 22. End flap portions 25 are hinged to panel 17. End flap portions 26 are hinged to panels 19. Corner tabs 31 are hinged to side walls 9 along fold lines 43.

For assembly the flange 15 is glued to the region 40 of the underside of the top panel 3, between two rows of holes 5. The margin 42 of panel 17 is then glued to the margin of panel 19, so that panel 17 is on the outside of the overlap. The flap portions 25,26 overlap also and are glued together at their overlap.

This creates an open ended sleeve, with projecting end flaps and corner tabs 31, as shown by Figure 2. This sleeve can be flattened by hinging along lines 21; giving the flattened form shown by Fig. 3. Indeed the assembly operation preferably leads to the flattened form.

To erect the carrier from a flattened sleeve, the sleeve is opened to the position shown in Figure 2, the corner tabs 31 are turned in, the end flap consisting of portions 25,26 is raised, the end flap 23 is brought down and its tabs 29 are inserted into slots 27. These slots 27 are not much longer than necessary to accommodate the tabs 29, so that the tabs 29 cannot slide very much lengthwise of the slots 27. This prevents hinging along the lines 21 while the internal panel 11 enhances overall rigidity.

An alternative to the use of tabs 29 engaging slots 27 would be for the flaps 23 to be larger, and glued to the flaps 25,26 when the carrier is erected.

The first side walls 9 are trapezoidal and are joined to the corner tabs 31 along fold lines 43 which are inclined relative to the lines 22. In consequence of this, when the carrier is erected the second pair of side walls 7 formed from the flaps 23 and joined flap portions 25,26 slope outwardly from the base to the top. The base and the top are both rectangular and have the same width, but the top is slightly longer than the base. This feature allows the base to fit within a specified nominal size determined by a trolley with which the carrier is to be used. However the slightly greater length of the top provides additional material in the top to form the desired number of openings 5.

The openings 5 are each formed from three arcs forming a curve equilateral triangle shape as illustrated.

These openings 5 are intended for the insertion of frusto-conical plant pots. They will tolerate some variation in angle of taper and diameter of the pots. If a plant pot which is pushed in through one of the openings 5 is slightly too large to fit within the opening, the central regions of each of the three arcs are pressed slightly outwards, so that the overall outline of the opening becomes slightly more circular.

This embodiment of carrier is provided with two finger holes 47 in the top surface to facilitate handling. In the base there are drainage holes 33 positioned to lie beneath the openings 5. Additionally there are finger holes 48 which again facilitate handling the carrier, while rectangular cut outs 49 may be provided to be engaged by positioning lugs on a trolley with which this carrier is used. An alternative shape for the holes 5, which is not illustrated, is an approximate equilateral triangle formed from three straight edges joined by part-circular arcs at the corners of the triangle.

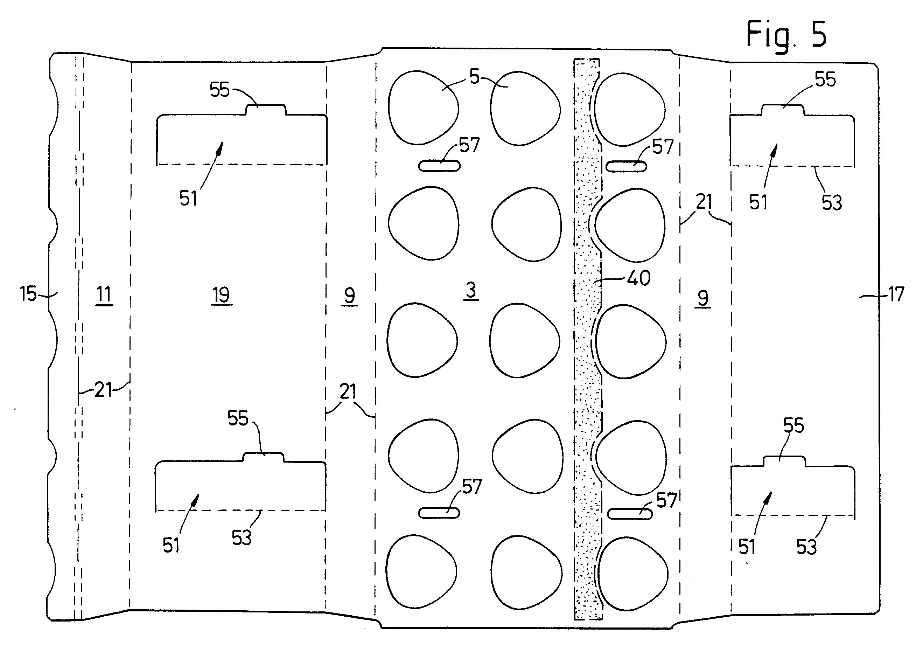

Fig. 5 shows the blank for a modified form of carrier. This carrier has a number of parts are directly analogous to the carrier shown by Figs. 1 to 4 and these are indicated by the same referenced numerals. Absent from the carrier of Fig. 5 are the flaps 23, 25, 26 which form the second end walls 7 and also the corner tabs 31. Instead this carrier has panels 51 formed as flaps which are cut out of the material of the base panels 17, 19 and are hinged to those base panels along hinge lines 53. This carrier is assembled from its blank into a sleeve in the same manner as with the carrier of Figs. 1 to 4. Thus the flange 15 is adhered to the area 40 on the underside of the top 3 and then the margin 42 of the base panel 17 is adhered to a margin of the underside of the base panel 19.

Once again this sleeve can be flattened in a manner directly analogous to the sleeve illustrated by Figures 2 and 3. When this carrier is erected from its flattened sleeve form the flaps 51 are pushed upwardly from beneath the base until the tabs 55 engage into the slots 57 cut out of the top 3. These flaps then form upright walls extending transversely to the side walls 9 and preventing further hinging about the fold lines 21.

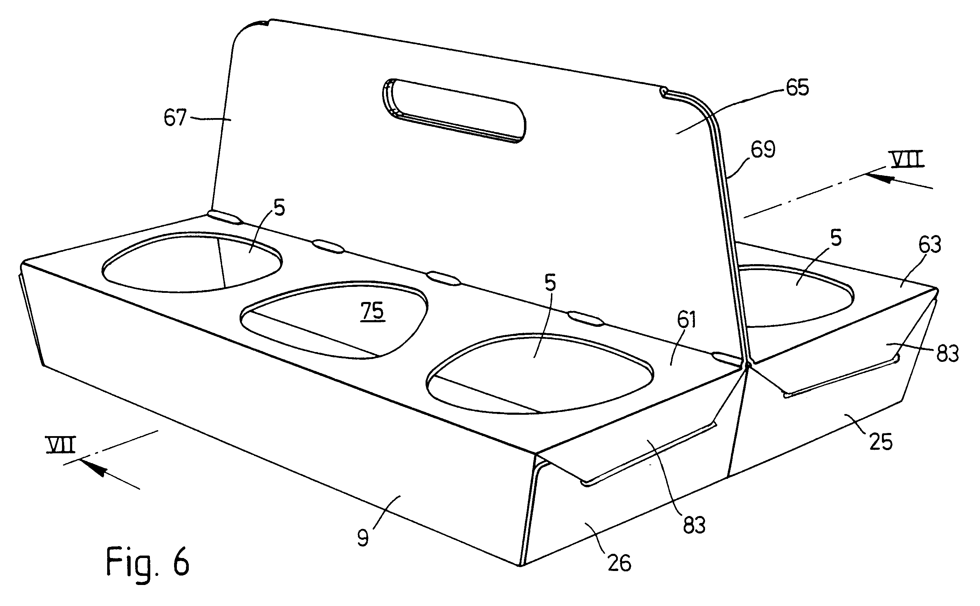

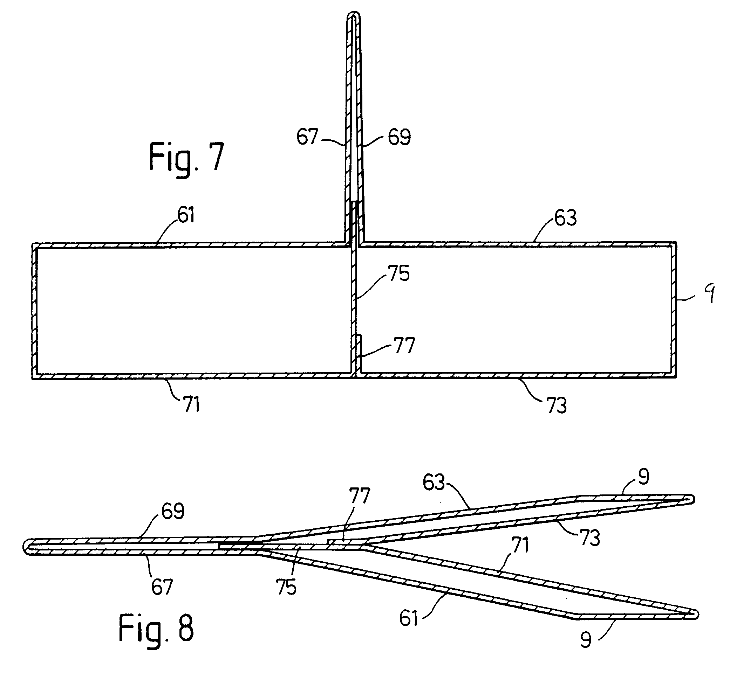

Figs. 6 onwards illustrate a third embodiment of carrier. As shown in Fig. 6 this carrier has a top formed from a pair of panels 61,63 each having three openings 5 for the insertion of articles, notably pot plants. (The overall dimensions of this top are 260 x 400mm). A handle 65 projects upwardly from between these panels 61,63. As best seen from the cross sectional view which is Fig. 7, the handle 65 is formed from a pair of panels 67,69 arranged back to back and joined together at the top of the handle. The base is formed from a pair of panels 71,73. An internal panel 75 is hinged to the panel 71 and extends upwardly from this to the top of the carrier where it projects between the panels 67,69. The base panel 73 is hinged to a flange 77 which is adhered to the internal panel 75.

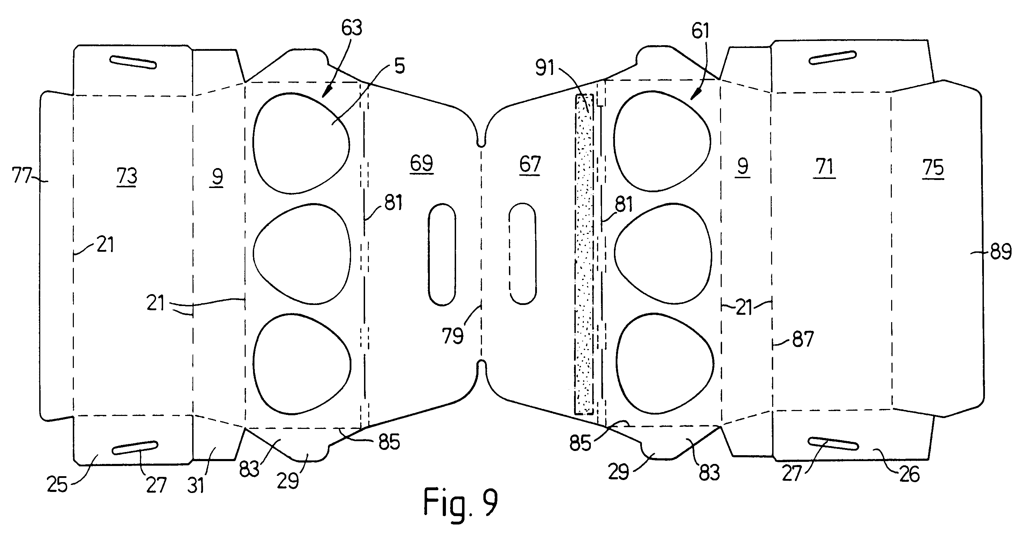

As shown by Fig. 9 the two panels 67,69 are hinged together along a fold line 79 at approximately the centre of the blank. The top panels 61,63 are hinged to the handle forming panels 67,69 along fold lines 81 which are each a line of half cuts, that is to say cuts alternating with crease lines. Successions of panels are hinged to the other edges of the top panels 61,63 along fold lines 21. These successions of panels each commence with a trapezoidal side wall 9. Hinged to these side walls along further fold lines 21 are the base panels 71 and 73. The internal wall 75 is then hinged to the base panel 71 along a further hinge line 21 while the flange 77 is hinged to the base panel 73 along another fold line 21.

Corner tabs 31 are hinged to the first side walls 9. Flaps 25,26 analogous to those shown in Figures 1 to 4 are hinged to the base panels 73,71. Further flaps 83 bearing tabs 29 are hinged to the top panels 63 along fold lines 85.

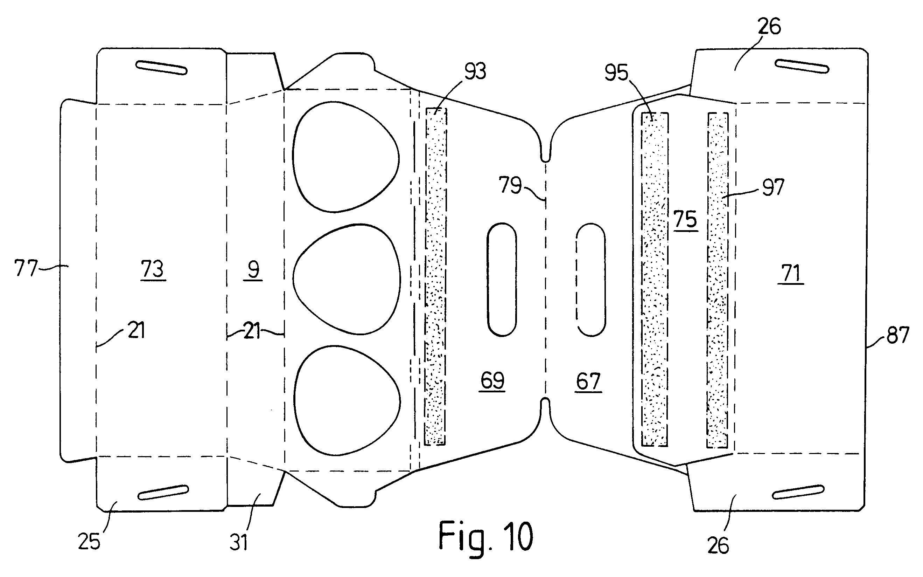

To assemble the carrier the base panel 71 and the internal panel 75 are first folded over around the fold line 87 and the margin 89 of the internal panel 75 is adhered to the area 91 at the base of the panel 67. This condition is illustrated by Figure 10.

Next the handle-forming panels 67,69 are folded together around the fold line 79. The area 93 at the base of panel 69 is adhered to the area 95 on the top margin of the internal panel 75. At the same time the flange 77 is adhered to the region 97 at the base of the internal panel 75. This brings the carrier to the form shown by Fig. 8 in which each half of the carrier takes the form of flattened sleeve and these two flattened sleeves are joined by the internal panel 75 which is common to them both.

To erect the carrier from the flattened sleeve condition illustrated by Fig. 8 the two sleeves are first opened out to give a shape as illustrated by Fig. 7. After this the flaps 25, 26 are brought up and the flaps 83 are brought down until the tabs 29 engage into the slots 27 thus forming second side walls 7 in a manner directly analogous to forming the second side walls 7 of the carrier of figures 1 to 4.

It will be appreciated that yet further embodiments of carrier within the scope of the present invention and the blanks for them may have yet different shapes, different numbers of openings 5 and different sizes. Preferably, the internal panel extends for substantially the entire length of the carrier. It might have apertures in it, which may or may not interrupt it completely by extending the full height from the base to the top, thus creating a succession of aligned internal panels.

## Claims

1. A carrier for articles formed from a cut and creased blank of foldable sheet material comprising a top (3,61,63) with openings (5) for insertion of the articles, a base (17,19,71,73), a first pair of opposite side walls (9) extending between the top (3,61,63) and the base (17,19,71,73) and additional panels (7) transverse to the first side walls (9) and also extending between the top and the base, characterized in that the carrier also has an internal panel (11) extending between the top (3,61,63) and the base (17,19,71,73) intermediately between the said first side walls (9) and spanning the full distance from the top to the base, the internal panel also extending longitudinally in between two sets of insertion openings.

2. A carrier according to claim 1 wherein the said first side walls (9) are each hinged to both the top and the base.

3. A carrier according to claim 1 or claim 2 wherein the additional panels transverse to the first side walls (9) are a second pair of opposite side walls (7).

4. A carrier according to claim 3 wherein the additional panels are formed by flaps (23,25,26,83) hinged to the top (3,61,63) and base (17,19,71,73) and engagable together.

5. A carrier according to any one of the previous claims wherein the top or the base is formed from a pair of panels (17,19,71,73) which are secured together, the internal panel (11,75) being hinged to one panel (19,71) of the pair.

6. A carrier according to any one of the preceding claims wherein the top is formed by a pair of panels (61,63) disposed at either side of an upwardly projecting handle (65).

7. A carrier according to claim 6 wherein the handle comprises a pair of panels (67,69) hinged together and each hinged to a respective one (61,63) of the panels which form the top.

8. A carrier according to any one of the preceding claims wherein openings (5) for insertion of articles are each bounded, at least in part, by a plurality of arcs which define concave edges to the aperture but do not have a common centre.

9. A flattened sleeve erectable into a carrier according to any one of the preceding claims, the sleeve having a top (3) with an array of openings (5) therein, a base (17,19), a pair of first side walls (9) extending between the top and base and hinged to both, an internal panel (11) also extending between and hinged to the top and base, and additional panels (7), or parts (25,26) of such additional panels hinged to the top or the base.

10. A joined pair of flattened sleeves, erectable into a carrier according to claim 6 or claim 7 each sleeve having a top panel (61,63) with openings (5) therein, a base panel (71,73) and a side wall extending between the top and base and hinged to both, an internal panel (75) which is common to both sleeves extending between and being hinged to the top and base panels of each sleeve.

## Patentansprüche

1. Träger bzw. Tragbehälter für Gegenstände, der aus einem geschnittenen und gefalteten Rohling aus faltbarem Plattenmaterial gebildet ist, umfassend eine Oberseite (3,61,63) mit Öffnungen (5) zum Einsetzen der Gegenstände, eine Basis (17,19,71,73), ein erstes Paar gegenüberliegender Seitenwände (9), die sich zwischen der Oberseite (3,61,63) und der Basis (17,19,71,73) erstrecken, und sich ebenfalls zwischen der Oberseite und der Basis erstreckende zusätzliche Wände (7) quer zu den ersten Seitenwänden (9), dadurch gekennzeichnet, daß der Träger bzw. Tragbehälter auch eine innere Wand (11) aufweist, die sich zwischen der Oberseite (3,61,63) und der Basis (17,19,71,73) zwischen den ersten Seitenwänden (9) liegend erstreckt und die volle Distanz von der Oberseite zur Basis überspannt, wobei sich die innere Wand auch in Längsrichtung zwischen zwei Gruppen von Einsetzöffnungen erstreckt.

2. Träger bzw. Tragbehälter nach Anspruch 1, worin die ersten Seitenwände (9) jeweils sowohl mit der Oberseite als auch mit der Basis gelenkig verbunden sind.

3. Träger bzw. Tragbehälter nach Anspruch 1 oder 2, worin die zusätzlichen Wände quer zu den ersten Seitenwänden (9) ein zweites Paar gegenüberliegender Seitenwände (7) sind.

4. Träger bzw. Tragbehälter nach Anspruch 3, worin die zusätzlichen Wände durch Klappen (23,25,26,83) gebildet werden, die mit der Oberseite (3,61,63) und der Basis (17,19,71,73) gelenkig verbunden und miteinander in Eingriff bringbar sind.

5. Träger bzw. Tragbehälter nach einem der vorhergehenden Ansprüche, worin die Oberseite oder die Basis aus einem Paar Wände (17,19,71,73) gebildet wird, die aneinander befestigt sind, wobei die innere Wand (11,75) gelenkig mit einer Wand (19,71) des Paares verbunden ist.

6. Träger bzw. Tragbehälter nach einem der vohergehenden Ansprüche, worin die Oberseite aus einem Paar Wände (61,63) gebildet wird, die an jeder Seite eines nach oben ragenden Griffes (65) angeordnet sind.

7. Träger bzw. Tragbehälter nach Anspruch 6, worin der Griff ein Paar Wände (67,69) umfaßt, die gelenkig miteinander und jedes gelenkig mit einer jeweiligen Wand (61,63), die die Oberseite bilden, verbunden sind.

8. Träger bzw. Tragbehälter nach einem der vorhergehenden Ansprüche, worin Öffnungen (5) zum Einsetzen von Gegenständen zumindest teilweise durch eine Vielzahl an Bögen begrenzt werden, die konkave Kanten zur Öffnung definieren, aber kein gemeinsames Zentrum haben.

9. Abgeflachte, zu einem Träger bzw. Tragbehälter nach einem der vorhergehenden Ansprüche aufstellbare Hülle, wobei die Hülle eine Oberseite (3) mit einer Reihe von Öffnungen (5) darin, eine Basis (17,19), ein Paar erster Seitenwände (9), die sich zwischen der Oberseite und der Basis erstrecken und mit beiden gelenkig verbunden sind, eine innere Wand (11), die sich ebenfalls zwischen der Oberseite und der Basis erstreckt und gelenkig mit beiden verbunden ist, und zusätzliche Wände (7), oder Teile (25,26) von solchen zusätzlichen Wänden, die mit der Oberseite oder Basis gelenkig verbunden sind, aufweist.

10. Verbundenes Paar abgeflachte, zu einem Träger bzw. Tragbehälter nach Anspruch 6 oder 7 aufstellbare Hüllen, wobei jede Hülle eine Oberseitenwand (61,63) mit Öffnungen (5) darin, eine Basiswand (71,73) und eine Seitenwand, die sich zwischen der Oberseite und der Basis erstreckt und mit beiden gelenkig verbunden ist, eine innere Wand (75), die beiden Hüllen gemeinsam ist und sich zwischen den Oberseiten- und den Basiswänden jeder Hülle erstreckt und damit gelenkig verbunden ist, aufweist.

## Revendications

1. Support pour des articles formés à partir d'une ébauche coupée et gaufrée de matériaux en feuille pliable comprenant un dessus (3, 61, 63) avec des ouvertures (5) pour l'insertion des articles, une base (17, 19, 71, 73), une première paire de parois latérales opposées (9) s'étendant entre le dessus (3, 61, 63) et la base (17, 19, 71, 73) et des panneaux additionnels (7) transversaux aux premières parois latérales (9) et s'étendant également entre le dessus et la base, caractérisé en ce que le support présente également un panneau interne (11) s'étendant entre le dessus (3, 61, 63) et la base (17, 19, 71, 73) au milieu entre lesdites premières parois latérales (9) et couvrant la distance entière du dessus à la base, le panneau interne s'étendant également longitudinalement entre deux ensembles d'ouvertures d'insertion.

2. Support selon la revendication 1, dans lequel lesdites premières parois latérales (9) sont articulées à la fois au dessus et à la base.

3. Support selon la revendication 1 ou la revendication 2, dans lequel les panneaux additionnels transversaux aux premières parois latérales (9) sont une deuxième paire de parois latérales opposées (17).

4. Support selon la revendication 3, dans lequel les panneaux additionnels sont formés par des volets (23, 25, 26, 83) articulés au dessus (3, 61, 63) et la base (17, 19, 71, 73) et peuvent être mis en prise les uns avec les autres.

5. Support selon l'une des revendications précédentes, dans lequel le dessus ou la base est réalisé à partir d'une paire de panneaux (17, 19, 71, 73) qui sont assemblés, le panneau interne (11, 75) étant articulé à un panneau (19, 71) de la paire.

6. Support selon l'une des revendications précédentes, dans lequel le dessus est formé par une paire de panneaux (61, 63) disposée de chaque côté d'une poignée (65) faisant saillie vers le haut.

7. Support selon la revendication 6, dans lequel la poignée comprend une paire de panneaux (67, 69) articulées ensemble et chacun articulé à l'un des panneaux respectifs (61, 63) qui forment le dessus.

8. Support selon l'une des revendications précédentes, dans lequel les ouvertures (5) pour l'insertion des articles sont chacune délimitées, au moins en partie, par une pluralité d'arcs qui définissent des bords concaves a l'ouverture mais qui n'ont pas un centre commun.

9. Manchon aplati pouvant être dressé pour former un support selon l'une des revendications précédentes, le manchon possédant un dessus (3) avec une rangée d'ouvertures (5), une base (17, 19), une paire de premières parois latérales (9) s'étendant entre le dessus et la base et articulés aux deux, un panneau interne (11) s'étendant également entre et étant articulé au dessus et à la base, et les panneaux additionnels (7) ou des parties (25, 26) de tels panneaux additionnels articulés au dessus ou à la base.

10. Paire assemblée de manchons aplatis, pouvant être dressés pour former un support selon la revendication 6 ou la revendication 7, chaque manchon présentant un panneau de dessus (61, 63) avec des ouvertures (5), un panneau de base (71, 73) et une paroi latérale s'étendant entre le dessus et la base et articulé aux deux, un panneau interne (75) qui est commun aux deux manchons s'étendant entre et étant articulé aux panneaux de dessus et de base de chaque manchon.
